# EUROPEAN PATENT SPECIFICATION

(11) **EP 3 936 309 B1**
(45) Date of publication and mention of the grant of the patent: **03.09.2025**
(21) Application number: 21184737.1
(22) Date of filing: 09.07.2021
(51) Int. Cl.: B22F 10/37, B22F 10/28, B22F 10/30, B22F 12/52, B22F 12/57, B22F 12/67, B29C 64/153, B29C 64/214, B33Y 10/00, B33Y 30/00, B33Y 50/02

(54) **METHOD FOR PRODUCING AN OBJECT BY MEANS OF ADDITIVE MANUFACTURING**
VERFAHREN ZUR HERSTELLUNG EINES OBJEKTS MITTELS GENERATIVER FERTIGUNG
PROCÉDÉ DE FABRICATION D'UN OBJET AU MOYEN D'UNE FABRICATION ADDITIVE

(30) Priority: 09.07.2020 NL 2026034
(43) Date of publication of application: 12.01.2022
(73) Proprietor: Additive Industries B.V., 5600 GA Eindhoven (NL)
(72) Inventor: VAN DER LOO, Jacobus Petrus Wilhelmus, EINDHOVEN (NL); VAES, Mark Herman Else, EINDHOVEN (NL)
(74) Representative: Algemeen Octrooi- en Merkenbureau B.V.

(56) References cited:
- EP-A1- 3 572 211
- JP-A- 2015 217 587
- JP-B2- 6 439 477
- US-A1- 2016 107 233
- US-A1- 2020 055 122

## Description

According to a first aspect, the present invention relates to a method for producing an object by means of additive manufacturing.

The present invention relates to a method for producing an object by means of additive manufacturing, comprising a process chamber for receiving a bath of material which can be solidified, a support for positioning the object in relation to a surface level of the bath of material, a solidifying device for solidifying a selective layer-part of the powdered material, and a recoating device which can be displaced along the surface level of the bath for supplying a layer of powdered material to the bath and for levelling the surface level of the bath.

3D printing or additive manufacturing refers to any of various processes for manufacturing a three-dimensional object in which material is joined or solidified under computer control to create a three-dimensional object, with material being added together, typically layer by layer.

The three-dimensional object may be produced by selectively solidifying, in a layer-like fashion, a powdered material to produce a three-dimensional object. In particular, a computer controlled additive manufacturing apparatus may be used which sequentially sinters a plurality of layer-parts to build the desired object in a layer-by-layer fashion. Primarily additive processes are used, in which successive layers of powdered material are laid down under computer control. These objects can be of almost any shape or geometry, and are produced from a 3D model or other electronic data source.

In order to print a three-dimensional object, a printable model is to be created with a computer design package or via a 3D scanner, for example. Usually, the input is a 3D CAD file. Before printing the object from a CAD file, the file is to be processed by a piece of software, which converts the model into a series of thin subsequent layers. Further, apparatus settings and vectors are generated for controlling the creation of each of the subsequent layers. By doing so, a job file may be created for the purpose of executing a build job for manufacturing of the object.

The computer controlled additive manufacturing apparatus may comprise a laser which follows these settings and vectors to solidify successive layer-parts of the material to build the 3D object from a series of cross sections. These layers, which correspond to the virtual cross sections from the CAD model, are during this process joined or fused at the same time to create the final 3D object.

EP3572211 A1 discloses an apparatus for additively manufacturing three-dimensional objects. US2016/0107233 A1 discloses a lamination molding apparatus. US2020/0055122 A1 discloses a method for additive manufacturing with selective removal of base material. JP6439477 B2 discloses three-dimensional molding apparatus, three-dimensional molding method, and program. JP2015217587 A discloses a solid molding device.

One of the challenges in the manufacturing of three dimensional objects, in particular in additive manufacturing of metal objects, is how to realize relative low manufacturing costs while allowing to realize a relative high object quality.

To reduce operational costs of the apparatus, it is an object to as much as possible utilize the capacity of the apparatus and, at the same time, make sure that the total object lead time of a three dimensional object is minimized, i.e. the object queue is minimized.

It is an object to provide a method that allows to realize relative low manufacturing costs while allowing to realize a relative high object quality, or at least without compromising object quality.

To this end, the invention provides a method for producing an object by means of additive manufacturing according to claim 1. The method according to the invention uses an apparatus comprising a process chamber for receiving a bath of powdered material which can be solidified, a support for positioning the object in relation to a surface level of the bath of powdered material, and a solidifying device for solidifying a selective layer-part of the powdered material. The apparatus also has a recoating device comprising a supply unit for supplying a layer of powdered material to the bath of powdered material, and a levelling unit which is arranged to be displaced along the surface level of the bath of powdered material for levelling the surface level of the bath of powdered material.

According to the invention, the apparatus further comprises a control unit for controlling the displacement of the levelling unit along the surface level of the bath, wherein the control unit is configured such that in use a speed of displacement of the levelling unit along the surface level of the bath of powdered material is varied during the production of the object, in dependence of a position of the levelling unit along the surface level during levelling, and a parameter related to a distance between the surface level and the support.

For example, a speed of displacement of the levelling unit may be varied in the range of 0.01 to 2 m/s, preferably in the range of 0.025 to 1 m/s, further preferably in the range of 0.05 to 0.5 m/s.

An effect of the method according to the present invention is that because of the control unit being configured such that in use a speed of displacement of the levelling unit is varied during the production of the object, as further detailed above, valuable machine time may be saved. The levelling unit levels the surface level of the bath of powdered material so that, using the solidifying device, subsequently a selective layer-part may be solidified for the purpose of producing the object. The levelling unit provides a uniform surface level, a homogenous powder material layer, or, volume, in the bath, and influences a required layer-part thickness accuracy, a surface level accuracy, and/or a required layer-part contour accuracy, for example. This influences the quality, such as a surface quality or volumetric uniformity, of the subsequently solidified layer-part and thus of the object to be produced.

The present invention is based on the insight that valuable machine time and thus manufacturing cost may be saved by varying the required local layer quality, in particular relating to the surface level, because layers or layer sections of a lower required quality may be levelled at a higher speed and thus in a shorter amount of time. Often an object or objects to be produced is/are centered at the support, so that according to the invention further sections of the surface level, i.e. at positions along the surface level besides the section of a layer comprising the layer-part which, after the solidifying thereof, will be a part of the object, may be levelled at a higher speed, for example. The section of a layer comprising the layer-part which, after the solidifying thereof, will be a part of the object, may be levelled at a lower speed compared to said further sections for example, increasing object quality while still limiting machine time.

Also, according to the invention, a speed of displacement of the levelling unit may be varied in dependence of structural properties of the object at specific positions along the surface level. For example, at a position of a so-called upskin of the object, which is an upper side of an inclined object surface portion, the levelling unit speed may be increased, while at a so-called downskin of the object, which is a lower side of an inclined object surface portion to be formed, the levelling unit speed may be decreased, since such a downskin object surface portion is more critical since for example it is more prone to surface defects.

Also, according to the invention, a speed of displacement of the levelling unit may be varied in dependence of structural properties of some support structure at specific positions along the surface level. A support structure may be formed while also forming the object, for the purpose of supporting the object while manufacturing. This may in particular be at issue in case of some overhanging object portion.

In this regard it is noted that for an object having a height of 100 mm, for example, typically several hundred up to a few thousand layers are needed. Supplying and levelling one layer may typically take from half a second up to a few seconds. Thus, by decreasing the time needed to level a single layer in accordance with the invention, a significant overall machine time reduction may be achieved. Thus, with the apparatus according to the invention, an above object is achieved. The method according to the invention achieves relative low manufacturing costs without compromising object quality.

Typically, the levelling unit of an apparatus for producing an object by means of additive manufacturing is arranged to be displaced along the surface level of the bath of powdered material along a trajectory, such as a linear trajectory, between two sides, in case of a linear trajectory two opposing sides, of the bath of powdered material, so from a position along the surface level at one side of the bath up to a position along the surface level at another side of the bath. The displacement of the levelling unit from one side to the other, such as opposing side of the bath may also be referred to as a, i.e. one, swipe, or a stroke. The levelling unit swipes along the surface level for levelling the surface level by levelling the powdered material supplied by the supply unit. In an embodiment, the trajectory may be non-linear, such as curved.

By levelling is understood: making the surface level more level, i.e. making the surface level more flat, or, more even. Levelling also relates to providing a homogenous powder material bed, or, volume, at least at and near the surface level, in the bath, and/or to providing an even powder material density along the surface level.

The support for positioning the object in relation to a surface level of the bath of powdered material may be provided in a movable manner, in a vertical direction, in the apparatus, wherein the apparatus may be configured for moving the support, generally lowering, after a layer-part of material has been solidified, adding by the supply unit further material to the bath for generating a further layer of material to be solidified and maintaining the surface level at the same height, levelling by the levelling unit the surface level of the bath, and solidifying a layer-part of the further layer using the solidifying device.

The solidifying device may be configured for solidifying a selective layer-part of the powdered material by means of electromagnetic radiation. The solidifying device may further comprise a deflector unit arranged for deflecting electromagnetic radiation emitted by the solidifying device towards the surface level of the bath of material, and for thereby moving the electromagnetic radiation along the surface level.

The supply unit for supplying a layer of powdered material to the bath of powder material is arranged to supply the layer, that is, powdered material for forming said layer, from a powder material reservoir to the bath.

In an embodiment, the supply unit is arranged to be displaced along the surface level of the bath of powdered material jointly with the levelling unit. This way, a speed of displacement of the levelling unit is thus the same as a speed of displacement of the supply unit. In such an embodiment, the recoating device is thus displaced along the surface level of the bath of powdered material for said supplying and levelling. The supply unit may be displaced along the surface level of the bath of powdered material jointly with the levelling unit for the purpose of the step of supplying and of levelling the supplied powdered material.

In another embodiment, the supply unit is arranged to be displaced along the surface level of the bath of material for supplying the layer of powdered material, wherein the control unit is also arranged for controlling the displacement of the supply unit along the surface level of the bath, and is configured such that in use a speed of displacement of the supply unit along the surface level of the bath of powdered material is varied during the production of the object, in dependence of a position of the supply unit along the surface level during supplying, and/or a parameter related to a distance between the surface level and the support. During the step of supplying, by the control unit, the speed of displacement of the supply unit may be varied in dependence of a position of the supply unit along the surface level during supplying, and/or a parameter related to a distance between the surface level and the support. During the step of levelling the surface level of a layer, said speed of displacement of the levelling unit may differ from the speed of displacement of the supply unit during the step of supplying that layer of powdered material.

In an embodiment, the levelling unit comprises an elongate levelling element with a longitudinal edge facing the surface level of the bath and arranged to swipe along the surface level of the bath as a result of the displacement along the surface level of the bath, for levelling the surface level of the bath. In case that said displacement would be in a first, e.g. a length direction of the bath, the levelling element would extend over the entire perpendicular second, e.g. width direction of the bath, so that in one swipe in the first direction, the entire surface level can be levelled.

The present invention relates to a method for producing an object by means of additive manufacturing, using an apparatus as described above. The method comprises:
- supplying, by the supply unit, a layer of powdered material to the bath,
- levelling, by the levelling unit, the surface level of the bath, and
- solidifying, by the solidifying device, said selective layer-part, after the recoating device has supplied and levelled a layer of the powdered material, so as to thereby produce the object, or at least a layer of the object.

In accordance with the present invention, the step of levelling comprises:
- varying, by the control unit, the speed of displacement of the levelling unit in dependence of a position of the levelling unit along the surface level during levelling, and a parameter related to a distance between the surface level and the support.

According to the invention, the supply unit comprises a reservoir for holding a quantity of powdered material. During use, powdered material from the reservoir is used for the purpose of supplying a layer of powdered material to the bath. The reservoir is intermittently replenished with powdered material originating from a main storage on the apparatus during the manufacture of the object such as in between supplying layers for the purpose of manufacturing the object.

According to the invention, for the purpose of the step of supplying a layer of powdered material to the bath, powdered material from a reservoir on the supply unit is used. The method comprises intermittently replenishing the reservoir with a quantity of powdered material originating from a main storage on the apparatus, during the manufacture of the object, and further comprises varying, by the control unit, an interval of the intermittent replenishing of the reservoir on the supply unit and the quantity of the powdered material with which the reservoir is replenished, in dependence of a parameter related to a distance between the surface level and the support. In other words, by varying the replenishment quantity of the powdered material for replenishing of the reservoir, a number of layers which can subsequently be supplied using that quantity is varied. Reducing the replenishment quantity leads to less layers which can be supplied but may lead to a higher layer quality because a pressure by powdered material from said reservoir on the powdered material already present in the bath may be lower, or, alternatively, a speed of the levelling may in such a case be increased without compromising the layer quality.

For example, the reservoir is replenished every Xth layer, such as every second or fourth layer for example, during the supplying of a first number of layers, such as 1200 layers, for example. For example, X may be any number between 1 and 20 or between 2 and 10. After that, the replenishment quantity, and thereby also the interval in case of an unamended layer dosing as referred to below, is varied so that during the supplying of a next number of layers, such as the next 1600 layers, for example, the reservoir is replenished every Yth layer, such as every eight layer for example. For example, Y may be any number between 1 and 20 or between 2 and 10, and different from X. The sequence number of the layer is in this case thus the parameter related to a distance between the surface level and the support.

In an embodiment of the apparatus according to the invention, the supply unit is arranged to supply a dosing of the powdered material for the purpose of supplying a layer of powdered material.

In an embodiment of the method according to the invention, for the purpose of the step of supplying a layer of powdered material to the bath, a dosing of the powdered material is supplied. The method comprises varying, by the control unit, the dosing of powdered material to be supplied in dependence of a parameter related to a distance between the surface level and the support.

For example, such a layer dosing, for the purpose of supplying a first number of layers, may be set larger than a layer dosing for the purpose of supplying said next number of layers, for example. As a result, a layer thickness of said first number of layers may be greater compared to that of said next number of layers. In other words, in case of a required greater or smaller layer thickness for a particular layer or for a specific number of layers, the layer dosing may thus be varied.

For example, a speed of displacement of the levelling unit may be set higher in case of a thicker layer.

In an embodiment, the method additionally comprises the step of assigning a required quality related parameter to layers and/or to an individual section, i.e. individual positions along the surface level, of a layer, to be supplied by the supply unit of the recoating device, wherein the step of levelling comprises varying, by the control unit, the speed of displacement of the levelling unit, in dependence of said required quality related parameter assigned to the layer and/or a section thereof, such that the speed of displacement is higher during the levelling of a layer or a section thereof having a lower required quality and lower during the levelling of a layer or a section thereof having a higher required quality.

In an embodiment, the quality related parameter is related to at least one of a required layer-part thickness accuracy, a surface level accuracy, a volumetric or geometric accuracy, a required layer-part contour accuracy, a smallest object feature size (relatively small features are more critical to manufacture and more fragile so that related layers are to be levelled slower, i.e. said related layers may be allocated a higher quality related parameter), a quality requirement of the object, such as object surface quality. Generally, a higher requirement on accuracy or surface quality or such parameters results in a higher quality related parameter value.

In an embodiment, the step of assigning comprises assigning a lower quality related parameter to an entire layer of which layer a selective layer-part thereof, after the solidifying thereof, is a part of the object having a relatively lower required quality, and assigning a higher quality related parameter to another entire layer of which layer a selective layer-part thereof, after the solidifying thereof, is another part of said object having a relatively higher required quality.

In an embodiment, the step of assigning comprises assigning a lower quality related parameter to an individual section of a layer which section is free from the selective layer-part of that layer which, after the solidifying thereof, is a part of the object, and assigning a higher quality related parameter to another individual section of that same layer which other section comprises a selective layer-part of that layer which, after the solidifying thereof, is a part of the object.

In an embodiment, the step of supplying comprises supplying a first sub-layer of the layer to the bath by displacing the supply unit along the surface level of the bath in a direction, or first direction, such as forward along a trajectory which may be a linear trajectory, and then supplying a second, remaining sub-layer of the layer to the bath by displacing the supply unit along the surface level of the bath in the reverse, or, second direction, such as backward along the trajectory, as a result of which an entire layer has been supplied to the bath. Using such a, so-called, double-sweep action may be at issue in case of a relatively high required surface quality. The step of assigning may then comprise assigning a lower quality related parameter to said first sub-layer and assigning a higher quality related parameter to the second sub-layer or at least to an individual section thereof which section comprises a selective layer-part of that layer which, after the solidifying thereof, is a part of the object.

In an embodiment the supply unit and the levelling unit are both displaced in a forward and backward direction along the trajectory along the surface level of the bath for supplying and for levelling the layer, wherein for the purpose of producing the object, an angular orientation, about an axis perpendicular to the support, of the object on the support relative to the direction of the trajectory is chosen such that a total length, parallel to the direction, of each of the layers and/or of individual sections thereof to which a higher quality related parameter is assigned is smallest.

Generally, the present invention relates to a method for producing an object by means of additive manufacturing, using an apparatus comprising a process chamber for a bath of powdered material which can be solidified, a support for positioning the object in relation to a surface level of the bath, a solidifying device for solidifying a selective layer-part of the material, and a recoating device comprising a supply unit for supplying material to the bath and a levelling unit for levelling the surface level. The apparatus further comprises a control unit for controlling the displacement of the levelling unit and configured such that a speed of displacement of the levelling unit is varied during the production of the object, in dependence of a position of the levelling unit along the surface level during levelling, and a parameter related to a distance between the surface level and the support.

Embodiments of the method according to the present invention will next be explained by means of the accompanying schematic figures, wherein:
Fig. 1 shows a vertical cross section of an embodiment of an apparatus used for the method according to the first aspect of the present invention
Fig. 2 shows a vertical cross section of a further embodiment of an apparatus used for the method according to the first aspect of the present invention
Fig. 3 shows an embodiment of a method according to the second aspect of the present invention;
Figure 4a shows, in plan view, the surface of the bath of an embodiment of an apparatus used for the method according to the first aspect of the present invention; and
Figure 4b shows a position-speed graph as an example of a levelling step of a method in accordance with the present invention.

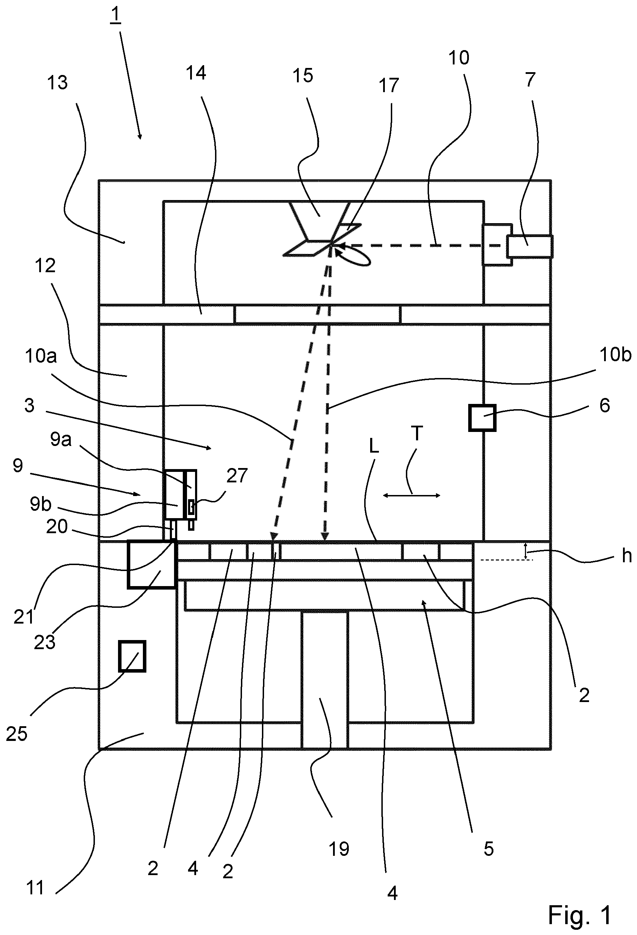

Figure 1 shows an overview of an apparatus 1 for producing an object 2 by means of additive manufacturing, used for the method in accordance with the present invention. The apparatus 1 is built from several frame parts 11, 12, 13. The apparatus 1 comprises a process chamber 3 for receiving a bath of powdered material 4 which can be solidified. The process chamber 3 is substantially air tight and is bounded at an upper side by an upper wall 33 which is arranged for allowing electromagnetic radiation to enter the process chamber 3 through the upper wall 14. The process chamber 3 is bounded at the four sides by side walls, of which only a left side wall and a right side wall are shown, in the view of figure 1. The bath of powdered material 4 is provided from a supply container 23, which is a stationary storage for powdered material of the apparatus. In a lower frame part 11, a shaft 19 is provided, wherein a support 5 is provided for positioning the object 2 (or even objects), or at least the object(s) to be produced, in relation to the surface level L of the bath of powdered material 4. The distance between the upper wall 14 and the surface level L is constant. The support 5 is movably provided on the shaft 19, such that after solidifying a layer of the object to be produced, the support 5 may be lowered, additional powdered material may be supplied to the bath and levelled by a recoating device 9, and a further layer-part of the bath of powdered material may be solidified on top of the part of the object 2 already formed.

In a top part 13 of the apparatus 1, a solidifying device 7 is provided for solidifying a selective layer-part of the bath of powdered material 4. In the embodiment shown, the solidifying device 7 is a laser device, which is arranged for producing electromagnetic radiation in the form of laser light, in order to locally melt the bath of powdered material 4 provided on the support 5, i.e. to melt a layer-part, which then, after cooling forms a solidified part of the object 2 to be produced. However, the invention is not limited to the type of solidifying device. As can be seen, the electromagnetic radiation 10 emitted by the laser device 7 is deflected by means of a deflector unit 15, which uses a rotatable optical element 17 to direct the emitted radiation 10 towards the surface of the layer-part of the bath of powdered material 4. Depending on the position of the deflector unit 15, radiation may be emitted, as an example, according to rays 10a, 10b. Apparatus 1 is further provided with a unit 6 arranged for providing or flushing an inert gas such as argon or nitrogen into or through the process chamber 3.

The apparatus 1 further comprises a recoating device 9 as mentioned above, which can be displaced along the surface level of the bath 4 for, horizontally, levelling the surface level L of the bath of material 4. The recoating device 9 can be moved along the surface level of the bath 4, along a horizontal linear trajectory T extending over the bath 4. The recoating device 9 has a supply unit 9a and a levelling unit 9b. The supply unit 9a supplies a quantity of powdered material from a reservoir 27 to the bath for the purpose of supplying a layer of the powdered material to the bath, i.e. a layer dosing. Intermittently, the reservoir 27 is replenished with a quantity of powdered material from the container 23, i.e. a replenishment dosing. The levelling unit 9b comprises at least one elongated levelling element 20 with a longitudinal edge 21 at a lower free end thereof, facing the surface of the bath 4 and arranged to swipe along the surface level of the bath as a result of the displacement of the levelling unit 9b along the surface level of the bath, for levelling the surface level L of the bath 4.

The supply unit 9a is arranged to be displaced along the surface level of the bath of powdered material jointly with the levelling unit 9b. For that purpose, both elements may be provided on a shared subframe movable along the surface level by means not shown in the figures, which may include a linear guide and a drive means such as including an electric motor, such as a servomotor, and a spindle, for example, connecting the drive means to the supply unit 9a and levelling unit 9b (or to said shared subframe).

The apparatus 1 further comprises a control unit 25, highly schematically shown in figure 1. The control unit 25 is arranged for controlling the electromagnetic radiation at said surface level L during solidification. To that end, the control unit 25 is communicatively coupled to the solidifying device 7 and the deflector unit 15. The control unit 25 is further communicatively coupled to and arranged for controlling the displacement of the levelling unit 9b and of the supply unit 9a along the surface level of the bath 4. In the example of figure 1, the control unit 25 is arranged for controlling the displacement of the supply unit jointly with the levelling unit along the surface level of the bath, by driving said drive means, for example. The control unit 25 is configured such that in use a speed of displacement of the levelling unit 9b along the surface level of the bath of powdered material is varied during the production of the object 2 or objects 2, in dependence of a position of the levelling unit 9b along the surface level during levelling, and a parameter related to a distance h between the surface level L and the support 5. Since the levelling unit 9b is displaced along the linear trajectory T along the surface level, said position of the levelling unit 9b along the surface level is a position in the direction of displacement, and forward, which may be to the left in the view of figure 1, or backward, which will then be to the right in the view of figure 1. Said parameter related to a distance h is a measure for the actual layer number of a total number of solidified layer-parts solidified to manufacture the object, counted from the bottom layer, which is also a parameter related to the distance between the surface level and the support. The actual layer is the layer to be solidified which defines the surface level L. For example, layer number X is thus the Xth layer from the bottom, which relates to a height position of the layer-part to be solidified and to a distance between the surface level L and the support 5.

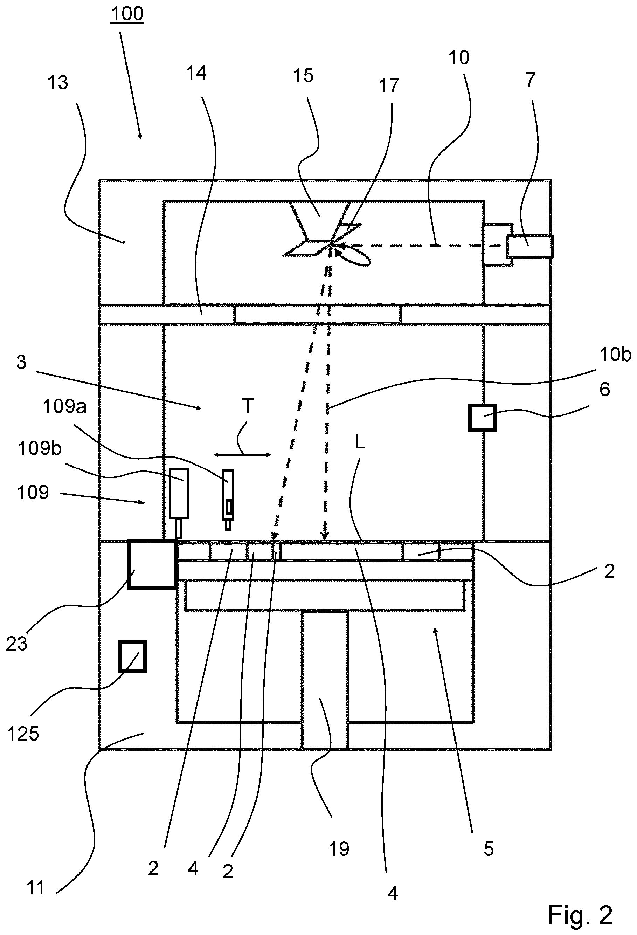

Figure 2 shows an apparatus 100, being an alternative embodiment of an apparatus used for the method according to the invention. Elements of apparatus 100 that are the same as elements of apparatus 1 are provided with a corresponding reference number, while elements which are different but have the same or a similar function are given a reference number corresponding to that of figure 1 raised by 100.

The apparatus 100 has a different embodiment of a recoating device 109. The recoating device 109 has a supply unit 109a and has a levelling unit 109b which can each independently be displaced along the trajectory T along the surface level of the bath of powdered material. In this embodiment, a control unit 125 is configured such that in use a speed of displacement of the levelling unit 109b along the surface level of the bath of powdered material is varied during the production of the object, in dependence of a position of the levelling unit 109b along the surface level during levelling, and a parameter related to a distance between the surface level and the support. The control unit 125 is also arranged for controlling the displacement of the supply unit 109a along the surface level of the bath, and is configured such that in use a speed of displacement of the supply unit 109a along the surface level of the bath of powdered material is varied during the production of the object, in dependence of a position of the supply unit 9a along the surface level during supplying, and/or a parameter related to a distance between the surface level and the support.

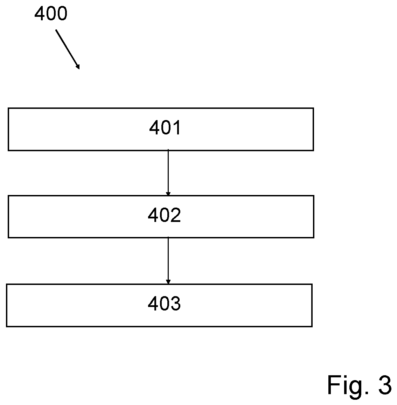

Fig. 3 shows an overview of a method 400 for producing an object 2 by means of additive manufacturing, using an apparatus 1 or 100. Method 400 comprises a step 401 of supplying, by the supply unit 9a, 109a, a layer of powdered material to the bath, a step 402 of levelling, by the levelling unit 9b, 109b, the surface level (L) of the bath 4, and a step 403 of solidifying, by the solidifying device 7, said selective layer-part, after the recoating device 9, 109 has supplied and levelled a layer of the powdered material, so as to thereby produce the object 2. Steps 401 and 402 may be performed at the same time, that is, during the same swipe of the recoating device.

The step of levelling comprises varying, by the control unit 25, 125, the speed of displacement of the levelling unit 9b, 109b in dependence of a position of the levelling unit 9b, 109b along the surface level during levelling, and a parameter related to a distance h between the surface level L and the support 5.

The method comprises varying, by the control unit 25, 125, a speed of displacement of the levelling unit 9b, 109b in dependence of a parameter related to a distance h between the surface level L and the support 5. For example, the speed for levelling a layer may be set at 0.4 m/s, for example, for the levelling of a first 1200 layers, for example. After that, the speed may be decreased to 0.2 m/s, for example for the purpose of levelling of a next number of layers, such as the next 1600 layers, for example. The sequence number of the layer is thus the parameter related to a distance between the surface level and the support in this example.

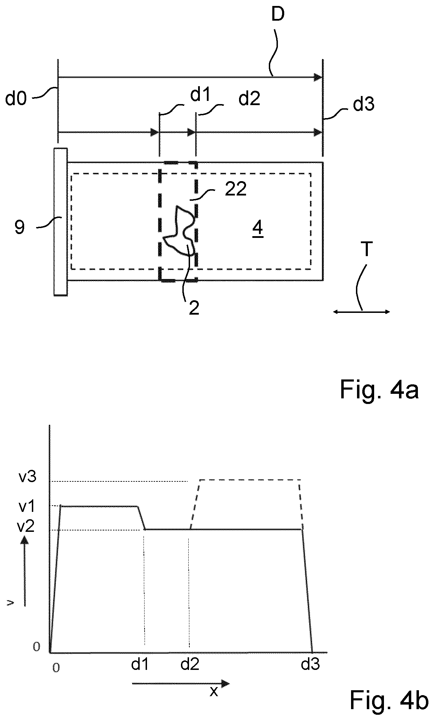

Figure 4a shows, schematically the surface level of the bath 4 in plan view. For the purpose of supplying and levelling a layer on top of a previous layer of which a layer-part has been solidified for the purpose of forming the object 2, the recoating device 9 is displaced over the distance D, forward along the trajectory T. Of that layer to be supplied and levelled, only a small portion, i.e. layer-part, will subsequently be solidified, as can be understood from figure 4a, in particular by the indicated contours of the object 2 at the height of that layer. The section of the layer just covering the object 2 contours is indicated by reference numeral 22. According to the invention, the speed v of displacement of the levelling unit 9b of the recoating device 9, may in an embodiment be varied in accordance with the graph of figure 4b. As shown, after an increase of the speed from zero to v1 (0.3 m/s, for example), the speed is maintained constant over a distance from d0 to d1, that means, over a section, or, positions along the surface level, of the layer besides the section 22 containing the layer-part to be solidified. As shown in figure 4b, then the speed is reduced from v1 to v2 (0.17 m/s, for example) and the levelling unit displaces at said reduced speed v2 over section 22, i.e. over the distance from d1 to d2, thereby creating a higher-quality surface level at the section 22 and thus also at the layer-part to be subsequently solidified. After having passed the section 22 at d2, the speed may be kept constant over the remaining section up to d3 on the right side (in the view of figure 4a) besides the section 22, or may be increased to a speed v3 (such as 0.25 m/s), for example, as shown by the dashed lines in figure 4b. For example, in embodiments v2 may be smaller than v1 which may be smaller than or equal to v3 or v2 may be smaller than v3 which may be smaller than or equal to v1. It will be understood that any speed profile, dependent on layer quality requirements may be applied within the context of the present invention. Thus, in such embodiments, a speed of displacement of the levelling unit along the surface level of the bath of powdered material is varied during the production of the object, in dependence of a position of the levelling unit along the surface level during levelling.

In a method using the apparatus 1, the supply unit 9a is displaced along the surface level of the bath of powdered material jointly with the levelling unit 9b for the purpose of the step of supplying and of levelling.

In a method using the apparatus 100, the step of supplying comprises varying, by the control unit 125, the speed of displacement of the supply unit 109a in dependence of a position of the supply unit 109a along the surface level during supplying, and/or a parameter related to a distance between the surface level L and the support 5. During said step of levelling the surface level of a layer, said speed of displacement of the levelling unit 109b may differ from the speed of displacement of the supply unit 109a during the step of supplying that layer of powdered material.

According to the invention, the method comprises varying, by the control unit 25, 125, an interval of the intermittent replenishing of the reservoir 27 on the supply unit 9a in dependence of a parameter related to a distance between the surface level and the support. This is realized by varying a quantity of powdered material with which the reservoir is replenished. For example, the reservoir is replenished every fourth layer during the supplying of a first 1200 layers, for example, after which the interval is varied so that during the supplying of a next number of layers, such as the next 1600 layers, for example, the reservoir 27 is replenished every eight layer for example. For that purpose, the replenishment quantity may be set lower during the supplying of said first number of layers than during the supplying of said next number of layers. The sequence number of the layer is thus the parameter related to a distance between the surface level and the support.

In an embodiment of the method according to the invention, the method may in addition comprise varying, by the control unit 25, 125, the dosing of powdered material to be supplied in dependence of a parameter related to a distance between the surface level and the support. In the above mentioned example relating to the replenishing of the reservoir 27 on the supply unit 9a with powdered material from container 23, a layer dosing for the purpose of supplying the first 1200 layers may be set larger than a dosing for the purpose of supplying said next 1600 layers, for example. By doing so, said first layers may have a greater thickness than said next layers. For example, a speed of displacement of the levelling unit may be set higher in case of a layer of a greater thickness.

The method, using the apparatus 1, 100, may additionally comprise the step of assigning a required quality related parameter to layers and/or to an individual section of a layer to be supplied by the supply unit 9a, 109a of the recoating device 9 ,109. The quality related parameter may be related to a required layer-part thickness accuracy, and/or a surface level accuracy, and/or a required layer-part contour accuracy, for example. The step of levelling may in that case comprise varying, by the control unit 25, 125, the speed of displacement of the levelling unit 9b, 109b, in dependence of said required quality related parameter assigned to the layer and/or a section thereof, such that the speed of displacement is higher during the levelling of a layer or a section thereof having a lower required quality and lower during the levelling of a layer or a section thereof having a higher required quality. In the example shown in figures 4a and 4b, the middle section 22 will have a higher quality related parameter compared to its left and right neighbouring further sections of the bath (because section 22 comprises the layer-part to be solidified as explained) and therefore only at that section 22 the speed of the recoating device may be decreased, or, the speed may be increased at said further sections compared to the speed at section 22.

As another example, for the purpose of supplying and levelling a layer on top of a previous layer that has of a layer-part thereof been solidified for the purpose of forming the object 2, the recoating device 9 may be displaced over the distance D, forward along the trajectory T, at a generally constant speed which is different from a generally constant speed of that previous layer. For example, a higher speed may be chosen compared to that of the previous layer in case that the required quality of the layer at issue is lower compared to that of the previous layer. In this example, a speed of displacement of the levelling unit along the surface level of the bath of powdered material is varied during the production of the object, in dependence of a parameter related to a distance between the surface level and the support.

The step of assigning may also comprise assigning a lower quality related parameter to an individual section of a layer which section is free from the selective layer-part of that layer which, after the solidifying thereof, is a part of the object, and assigning a higher quality related parameter to another individual section of that same layer which other section comprises a selective layer-part of that layer which, after the solidifying thereof, is a part of the object. An example of such an embodiment has been presented with reference to figures 4a and 4b, wherein section 22 is assigned a higher quality related parameter than the neighbouring further sections of the layer to be levelled.

The step of supplying may further comprise a so-called double sweep action for the purpose of supplying one layer of powder material to the bath. To that end, the step of supplying comprises supplying a first sub-layer of the layer to the bath by displacing the supply unit 9a, 109a along the surface level of the bath in a forward direction, and then supplying a second, remaining sub-layer of the layer to the bath by displacing the supply unit along the surface level of the bath in a backward direction, as a result of which an entire layer has been supplied to the bath. Using a double-sweep action may be at issue in case of a relatively high required surface quality. It is noted that the terms forward and backward are only used for the purpose of explaining embodiments of the present invention, in the sense of defining a first direction and a second, opposite direction.

The step of assigning may in that case comprise assigning a lower quality related parameter to said first sub-layer and assigning a higher quality related parameter to the second sub-layer or at least to an individual section thereof which section comprises a selective layer-part of that layer which, after the solidifying thereof, is a part of the object. So, the second sub-layer may then be levelled at a reduced speed than the first sub-layer. In addition, an individual section, like section 22, of that second sub-layer, may be levelled at a still further reduced speed in order to still further increase the quality of the surface level L of that layer.

In the apparatus 1, 100, the supply unit 9a, 109a and the levelling unit 9b, 109b are both displaced linearly forward and backward along the trajectory T along the surface level of the bath for supplying and for levelling the layer. For the purpose of producing the object, an angular orientation, about an axis perpendicular to the support, of the object on the support relative to the direction may be chosen such that a total length, parallel to the direction, of each of the layers and/or of individual sections thereof to which a higher quality related parameter is assigned is smallest.

This has been done in the example of figure 4a, from which can be understood that section 22 would have been wider in case that the object would have been rotated over 90 degrees about a vertical axis, i.e. perpendicular to the surface. By minimizing said total length related to higher quality as explained above, a total distance over which the levelling unit has to be displaced at a relatively lower speed is also minimized, leading to an even further reduction of required machine time to produce the object while observing the required overall object quality requirements.

The foregoing description provides embodiments of the invention by way of example only. The scope of the present invention is defined by the appended claims. One or more of the objects of the invention are achieved by the appended claims.

## Claims

1. Method for producing an object (2) by means of additive manufacturing, using an apparatus (1, 100) comprising:
- a process chamber (3) for receiving a bath of powdered material (4) which can be solidified;
- a support (5) for positioning the object (2) in relation to a surface level (L) of the bath of powdered material (4);
- a solidifying device (7) for solidifying a selective layer-part of the powdered material (4); and
- a recoating device (9) comprising:
- a supply unit (9a) for supplying a layer of powdered material (4) to the bath of powdered material, wherein the supply unit (9a) comprises a reservoir (27) for holding a quantity of powdered material (4), wherein, during use, powdered material (4) from the reservoir (27) is used for the purpose of supplying a layer of powdered material (4) to the bath and wherein the reservoir (27) is intermittently replenished with powdered material (4) originating from a main storage on the apparatus (1, 100) during the manufacture of the object (2) such as in between supplying layers for the purpose of manufacturing the object (2); and
- a levelling unit (9b) which is arranged to be displaced along the surface level (L) of the bath of powdered material (4) for levelling the surface level (L) of the bath of powdered material (4); the apparatus (1, 100) further comprising:
- a control unit (25) for controlling the displacement of the levelling unit (9b) along the surface level (L) of the bath of powdered material (4),
wherein the control unit (25) is configured such that in use a speed of displacement of the levelling unit (9b) along the surface level (L) of the bath of powdered material (4) is varied during the production of the object (2), in dependence of a position of the levelling unit (9b) along the surface level (L) during levelling and a parameter related to a distance between the surface level (L) and the support (5), wherein the parameter related to the distance is a measure for the actual layer number of a total number of solidified layer-parts solidified to manufacture the object (2), counted from the bottom layer;
the method comprising the steps of:
- supplying, by the supply unit (9a), a layer of powdered material (4) to the bath,
- levelling, by the levelling unit (9b), the surface level (L) of the bath, and
- solidifying, by the solidifying device (7), said selective layer-part, after the recoating device (9) has supplied and levelled a layer of the powdered material (4), so as to thereby produce the object (2),
wherein the step of levelling comprises:
- varying, by the control unit (25), the speed of displacement of the levelling unit (9b) in dependence of a position of the levelling unit (9b) along the surface level (L) during levelling and a parameter related to a distance between the surface level (L) and the support (5), wherein the parameter related to the distance is a measure for the actual layer number of a total number of solidified layer-parts solidified to manufacture the object (2), counted from the bottom layer; wherein for the purpose of the step of supplying a layer of powdered material (4) to the bath, powdered material (4) from a reservoir (27) on the supply unit (9a) is used,
the method comprising:
- intermittently replenishing the reservoir (27) with powdered material (4) originating from a main storage on the apparatus (1, 100), during the manufacture of the object (2), the method further comprising:
- varying, by the control unit (25), an interval of the intermittent replenishing of the reservoir (27) on the supply unit (9a) and a quantity of the powdered material (4) with which the reservoir (27) is replenished, in dependence of the parameter related to the distance between the surface level (L) and the support (5).

2. Method according to claim 1, using an apparatus wherein the supply unit is arranged to be displaced along the surface level of the bath of powdered material jointly with the levelling unit, wherein the supply unit is displaced along the surface level of the bath of powdered material jointly with the levelling unit for the purpose of the step of supplying and of levelling.

3. Method according to claim 1 using an apparatus wherein the supply unit is arranged to be displaced along the surface level of the bath of material for supplying the layer of powdered material,
wherein the control unit is also arranged for controlling the displacement of the supply unit along the surface level of the bath, and is configured such that in use a speed of displacement of the supply unit along the surface level of the bath of powdered material is varied during the production of the object, in dependence of a position of the supply unit along the surface level during supplying, and/or a parameter related to a distance between the surface level and the support,
wherein the step of supplying comprises:
- varying, by the control unit, the speed of displacement of the supply unit in dependence of a position of the supply unit along the surface level during supplying, and/or a parameter related to a distance between the surface level and the support,
preferably wherein during said step of levelling the surface level of a layer, said speed of displacement of the levelling unit differs from the speed of displacement of the supply unit during the step of supplying that layer of powdered material.

4. Method according to any one of claims 1 - 3, wherein for the purpose of the step of supplying a layer of powdered material to the bath, a dosing of the powdered material is supplied,
the method comprising:
- varying, by the control unit, the dosing of powdered material to be supplied in dependence of a parameter related to a distance between the surface level and the support.

5. Method according to claim 1 or a claim dependent thereof, additionally comprising the step of:
- assigning a required quality related parameter to layers and/or to an individual section of a layer to be supplied by the supply unit of the recoating device, wherein the step of levelling comprises
- varying, by the control unit, the speed of displacement of the levelling unit, in dependence of said required quality related parameter assigned to the layer and/or a section thereof, such that the speed of displacement is higher during the levelling of a layer or a section thereof having a lower required quality and lower during the levelling of a layer or a section thereof having a higher required quality.

6. Method according to claim 5, wherein the step of assigning comprises assigning a lower quality related parameter to an entire layer of which layer a selective layer-part thereof, after the solidifying thereof, is a part of the object having a relatively lower required quality, and assigning a higher quality related parameter to another entire layer of which layer a selective layer-part thereof, after the solidifying thereof, is another part of said object having a relatively higher required quality.

7. Method according to claim 5 or 6, wherein the step of assigning comprises assigning a lower quality related parameter to an individual section of a layer which section is free from the selective layer-part of that layer which, after the solidifying thereof, is a part of the object, and assigning a higher quality related parameter to another individual section of that same layer which other section comprises a selective layer-part of that layer which, after the solidifying thereof, is a part of the object.

8. Method according to any one of the preceding claims 5 - 7, wherein
the step of supplying comprises:
- supplying a first sub-layer of the layer to the bath by displacing the supply unit along the surface level of the bath in a direction along a trajectory, and then
- supplying a second, remaining sub-layer of the layer to the bath by displacing the supply unit along the surface level of the bath in the reverse direction along the trajectory, as a result of which an entire layer has been supplied to the bath, wherein the step of assigning comprises assigning a lower quality related parameter to said first sub-layer and assigning a higher quality related parameter to the second sub-layer or at least to an individual section thereof which section comprises a selective layer-part of that layer which, after the solidifying thereof, is a part of the object.

9. Method according to any one of the preceding claims 5 - 8, wherein
the supply unit and the levelling unit are both displaced in a direction and the reverse direction along a trajectory along the surface level of the bath for supplying and for levelling the layer,
wherein for the purpose of producing the object, an angular orientation, about an axis perpendicular to the support, of the object on the support relative to the direction is chosen such that a total length, parallel to the direction, of each of the layers and/or of individual sections thereof to which a higher quality related parameter is assigned is smallest.

10. Method according to any one of the preceding claims 5 - 9, wherein
the quality related parameter is related to a required layer-part thickness accuracy, and/or a surface level accuracy, and/or a required layer-part contour accuracy.

## Patentansprüche

1. Verfahren zum Herstellen eines Objekts (2) mittels additiver Fertigung unter Verwendung einer Einrichtung (1, 100), umfassend:
- eine Prozesskammer (3) zum Aufnehmen eines Bades aus pulverisiertem Material (4), das verfestigt werden kann;
- einen Träger (5) zum Positionieren des Objekts (2) in Relation zu einem Oberflächenniveau (L) des Bades aus pulverisiertem Material (4);
- eine Verfestigungsvorrichtung (7) zum Verfestigen eines selektiven Schichtteils des pulverisierten Materials (4); und
- eine Wiederbeschichtungsvorrichtung (9), umfassend:
- eine Zuführeinheit (9a) zum Zuführen einer Schicht pulverisierten Materials (4) zu dem Bad aus pulverisiertem Material, wobei die Zuführeinheit (9a) ein Reservoir (27) zum Aufnehmen einer Menge pulverisierten Materials (4) umfasst, wobei während des Gebrauchs pulverisiertes Material (4) aus dem Reservoir (27) dazu verwendet wird, um dem Bad eine Schicht pulverisierten Materials (4) zuzuführen, und wobei das Reservoir (27) während der Fertigung des Objekts (2), wie zwischen Zuführen von Schichten zur Fertigung des Objekts (2), intermittierend mit pulverisiertem Material (4) aufgefüllt wird, das aus einem Hauptvorrat auf der Einrichtung (1, 100) stammt; und
- eine Nivelliereinheit (9b), die so angeordnet ist, dass sie entlang des Oberflächenniveaus (L) des Bades (4) aus pulverisiertem Material verschoben wird, um das Oberflächenniveau (L) des Bades (4) aus pulverisiertem Material zu nivellieren;
wobei die Einrichtung (1, 100) ferner umfasst:
- eine Steuereinheit (25) zum Steuern der Verschiebung der Nivelliereinheit (9b) entlang des Oberflächenniveaus (L) des Bades (4) aus pulverisiertem Material, wobei die Steuereinheit (25) so konfiguriert ist, dass im Gebrauch eine Verschiebungsgeschwindigkeit der Nivelliereinheit (9b) entlang des Oberflächenniveaus (L) des Bades (4) aus pulverisiertem Material während der Herstellung des Objekts (2) in Abhängigkeit von einer Position der Nivelliereinheit (9b) entlang des Oberflächenniveaus (L) während des Nivellierens und einem Parameter variiert wird, der in Beziehung zu einem Abstand zwischen dem Oberflächenniveau (L) und dem Träger (5) steht, wobei der Parameter, der in Beziehung zu dem Abstand steht, ein Maß für die tatsächliche Schichtanzahl einer Gesamtzahl von verfestigten Schichtteilen ist, die zur Fertigung des Objekts (2) verfestigt wurden, gezählt von der untersten Schicht;
wobei das Verfahren die Schritte umfasst:
- Zuführen einer Schicht pulverisierten Materials (4) durch die Zuführeinheit (9a) zu dem Bad,
- Nivellieren des Oberflächenniveaus (L) des Bades durch die Nivelliereinheit (9b), und
- Verfestigen des selektiven Schichtteils durch die Verfestigungsvorrichtung (7), nachdem die Wiederbeschichtungsvorrichtung (9) eine Schicht des pulverisierten Materials (4) zugeführt und nivelliert hat, um dadurch das Objekt (2) herzustellen, wobei der Schritt des Nivellierens umfasst:
- Variieren der Verschiebungsgeschwindigkeit der Nivelliereinheit (9b) in Abhängigkeit von einer Position der Nivelliereinheit (9b) entlang des Oberflächenniveaus (L) während des Nivellierens und einem Parameter, der mit einem Abstand zwischen dem Oberflächenniveau (L) und dem Träger (5) in Beziehung steht, durch die Steuereinheit (25), wobei der Parameter, der mit dem Abstand in Beziehung steht, ein Maß für die tatsächliche Schichtanzahl einer Gesamtzahl von verfestigten Schichtteilen (2) zur Fertigung des Objekts ist, gezählt von der untersten Schicht; wobei für den Schritt des Zuführens einer Schicht aus pulverisiertem Material (4) zu dem Bad pulverisiertes Material (4) aus einem Reservoir (27) auf der Zuführeinheit (9a) verwendet wird,
wobei das Verfahren umfasst:
- intermittierendes Auffüllen des Reservoirs (27) mit pulverisiertem Material (4), das aus einem Hauptvorrat auf der Einrichtung (1, 100) stammt, während der Fertigung des Objekts (2);
wobei das Verfahren ferner umfasst:
- Variieren eines Intervalls der intermittierenden Auffüllung des Reservoirs (27) auf der Zuführeinheit (9a) und einer Menge des pulverisierten Materials (4), mit dem das Reservoir (27) aufgefüllt wird, durch die Steuereinheit (25) in Abhängigkeit von dem Parameter, der mit dem Abstand zwischen dem Oberflächenniveau (L) und dem Träger (5) in Beziehung steht.

2. Verfahren nach Anspruch 1 unter Verwendung einer Einrichtung, bei der die Zuführeinheit angeordnet ist, um entlang des Oberflächenniveaus des Bades aus pulverisiertem Material gemeinsam mit der Nivelliereinheit verschoben zu werden, wobei die Zuführeinheit entlang des Oberflächenniveaus des Bades aus pulverisiertem Material gemeinsam mit der Nivelliereinheit für den Zuführ- und Nivellierschritt verschoben wird.

3. Verfahren nach Anspruch 1 unter Verwendung einer Einrichtung, wobei die Zuführeinheit angeordnet ist, um entlang des Oberflächenniveaus des Materialbades zum Zuführen der Schicht aus pulverisiertem Material verschoben zu werden,
wobei die Steuereinheit auch zum Steuern der Verschiebung der Zuführeinheit entlang des Oberflächenniveaus des Bades angeordnet ist und so konfiguriert ist, dass im Gebrauch eine Verschiebungsgeschwindigkeit der Zuführeinheit entlang des Oberflächenniveaus des Bades aus pulverisiertem Material während der Herstellung des Objekts in Abhängigkeit von einer Position der Zuführeinheit entlang des Oberflächenniveaus während des Zuführens und/oder einem Parameter variiert wird, der in Beziehung zu einem Abstand zwischen dem Oberflächenniveau und dem Träger steht,
wobei der Schritt des Zuführens umfasst:
- Variieren der Verschiebungsgeschwindigkeit der Zuführeinheit in Abhängigkeit von einer Position der Zuführeinheit entlang des Oberflächenniveaus während des Zuführens und/oder einem Parameter, der in Beziehung zu einem Abstand zwischen dem Oberflächenniveau und dem Träger steht, durch die Steuereinheit,
wobei vorzugsweise während des Schritts des Nivellierens des Oberflächenniveaus einer Schicht die Verschiebungsgeschwindigkeit der Nivelliereinheit sich von der Verschiebungsgeschwindigkeit der Zuführeinheit während des Schritts des Zuführens dieser Schicht aus pulverisiertem Material unterscheidet.

4. Verfahren nach einem der Ansprüche 1-3, wobei für den Schritt des Zuführens einer Schicht pulverisierten Materials zu dem Bad eine Dosis des pulverisierten Materials zugeführt wird,
wobei das Verfahren umfasst:
- Variieren der Dosis des zuzuführenden pulverisierten Materials in Abhängigkeit von einem Parameter, der in Beziehung zu einem Abstand zwischen dem Oberflächenniveau und dem Träger steht, durch die Steuereinheit.

5. Verfahren nach Anspruch 1 oder einem davon abhängigen Anspruch, das zusätzlich den Schritt umfasst:
- Zuweisen eines erforderlichen qualitätsbezogenen Parameters zu Schichten und/oder zu einem individuellen Segment einer Schicht, die von der Zuführeinheit der Wiederbeschichtungsvorrichtung zugeführt werden sollen, wobei der Schritt des Nivellierens umfasst
- Variieren der Verschiebungsgeschwindigkeit der Nivelliereinheit in Abhängigkeit von dem der Schicht und/oder einem Segment davon zugewiesenen erforderlichen qualitätsbezogenen Parameter durch die Steuereinheit, so dass die Verschiebungsgeschwindigkeit während des Nivellierens einer Schicht oder eines Segments davon mit einer niedrigeren erforderlichen Qualität höher und während des Nivellierens einer Schicht oder eines Segments davon mit einer höheren erforderlichen Qualität niedriger ist.

6. Verfahren nach Anspruch 5, wobei der Schritt des Zuweisens Zuweisen eines niedrigeren qualitätsbezogenen Parameters zu einer gesamten Schicht, von der ein selektiver Schichtteil davon nach dem Verfestigen davon ein Teil des Objekts mit einer relativ niedrigeren erforderlichen Qualität ist, und Zuweisen eines höheren qualitätsbezogenen Parameters zu einer anderen gesamten Schicht umfasst, von der ein selektiver Schichtteil davon nach dem Verfestigen davon ein anderer Teil des Objekts mit einer relativ höheren erforderlichen Qualität ist.

7. Verfahren nach Anspruch 5 oder 6, wobei der Schritt des Zuweisens Zuweisen eines niedrigeren qualitätsbezogenen Parameters zu einem individuellen Segment einer Schicht, wobei das Segment frei von dem selektiven Schichtteil jener Schicht ist, der nach dem Verfestigen davon ein Teil des Objekts ist, und Zuweisen eines höheren qualitätsbezogenen Parameters zu einem anderen individuellen Segment derselben Schicht umfasst, wobei das andere Segment einen selektiven Schichtteil jener Schicht umfasst, der nach deren Verfestigung ein Teil des Objekts ist.

8. Verfahren nach einem der vorhergehenden Ansprüche 5-7, wobei der Schritt des Zuführens umfasst:
- Zuführen einer ersten Teilschicht der Schicht zu dem Bad durch Verschieben der Zuführeinheit entlang des Oberflächenniveaus des Bades in einer Richtung entlang einer Trajektorie, und dann
- Zuführen einer zweiten, verbleibenden Teilschicht der Schicht zu dem Bad durch Verschieben der Zuführeinheit entlang des Oberflächenniveaus des Bades in umgekehrter Richtung entlang der Trajektorie, wodurch dem Bad eine gesamte Schicht zugeführt wurde,
wobei der Schritt des Zuweisens Zuweisen eines niedrigeren qualitätsbezogenen Parameters zu der ersten Teilschicht und Zuweisen eines höheren qualitätsbezogenen Parameters zu der zweiten Teilschicht oder zumindest einem individuellen Segment davon umfasst, wobei das Segment einen selektiven Schichtteil jener Schicht umfasst, die nach dem Verfestigen davon ein Teil des Objekts ist.

9. Verfahren nach einem der vorhergehenden Ansprüche 5-8, wobei die Zuführeinheit und die Nivelliereinheit beide in einer Richtung und der umgekehrten Richtung entlang einer Trajektorie entlang des Oberflächenniveaus des Bades zum Zuführen und zum Nivellieren der Schicht verschoben werden,
wobei zum Herstellen des Objekts eine Winkelorientierung des Objekts auf dem Träger um eine Achse rechtwinklig zu dem Träger relativ zu der Richtung so gewählt wird, dass eine Gesamtlänge parallel zu der Richtung von jeder der Schichten und/oder individuellen Segmenten davon, denen ein höherer qualitätsbezogener Parameter zugewiesen ist, am kleinsten ist.

10. Verfahren nach einem der vorhergehenden Ansprüche 5-9, wobei der qualitätsbezogene Parameter mit einer erforderlichen Schichtteildickengenauigkeit und/oder einer Oberflächenniveaugenauigkeit und/oder einer erforderlichen Schichtteilkonturgenauigkeit in Beziehung steht.

## Revendications

1. Procédé de production d'un objet (2) par fabrication additive, utilisant un appareil (1, 100) comprenant :
- une chambre de traitement (3) pour recevoir un bain de matériau en poudre (4) qui peut être solidifié ;
- un support (5) pour positionner l'objet (2) par rapport à un niveau de surface (L) du bain de matériau en poudre (4) ;
- un dispositif de solidification (7) pour solidifier une partie de couche sélective du matériau en poudre (4) ; et
- un dispositif de recouvrement (9) comprenant :
- une unité d'alimentation (9a) pour alimenter le bain de matériau en poudre en une couche de matériau en poudre (4), où l'unité d'alimentation (9a) comprend un réservoir (27) pour contenir une quantité de matériau en poudre (4), où, pendant l'utilisation, le matériau en poudre (4) du réservoir (27) est utilisé dans le but d'alimenter le bain en une couche de matériau en poudre (4), et où le réservoir (27) est rempli par intermittence avec le matériau en poudre (4) provenant d'une réserve principale sur l'appareil (1, 100) pendant la fabrication de l'objet (2), par exemple entre la fourniture de couches dans le but de fabriquer l'objet (2) ; et
- une unité de nivellement (9b) qui est agencée pour se déplacer le long du niveau de surface (L) du bain de matériau en poudre (4) pour le nivellement du niveau de surface (L) du bain de matériau en poudre (4) ;
l'appareil (1, 100) comprenant en outre :
- une unité de commande (25) pour commander le déplacement de l'unité de nivellement (9b) le long du niveau de surface (L) du bain de matériau en poudre (4),
dans lequel l'unité de commande (25) est configurée de sorte qu'en cours d'utilisation, la vitesse de déplacement de l'unité de nivellement (9b) le long du niveau de surface (L) du bain de matériau en poudre (4) varie pendant la production de l'objet (2), en fonction de la position de l'unité de nivellement (9b) le long du niveau de surface (L) pendant le nivellement et d'un paramètre lié à la distance entre le niveau de surface (L) et le support (5), où le paramètre lié à la distance est une mesure du nombre de couches réel d'un nombre total de parties de couches solidifiées qui sont solidifiées pour fabriquer l'objet (2), compté à partir de la couche inférieure ;
le procédé comprenant les étapes :
- d'alimentation, par l'unité d'alimentation (9a), du bain en une couche de matériau en poudre (4),
- de nivellement, par l'unité de nivellement (9b), du niveau de surface (L) du bain, et
- de solidification, par le dispositif de solidification (7), de ladite partie de couche sélective, après que le dispositif de recouvrement (9) a fourni et nivelé une couche du matériau en poudre (4), afin de produire ainsi l'objet (2),
dans lequel l'étape de nivellement comprend :
- la variation, par l'unité de commande (25), de la vitesse de déplacement de l'unité de nivellement (9b) en fonction de la position de l'unité de nivellement (9b) le long du niveau de surface (L) pendant le nivellement et d'un paramètre lié à la distance entre le niveau de surface (L) et le support (5),
dans lequel le paramètre lié à la distance est une mesure du nombre de couches réel d'un nombre total de parties de couches solidifiées qui sont solidifiées pour fabriquer l'objet (2), compté à partir de la couche inférieure ;
dans lequel, aux fins de l'étape d'alimentation du bain en une couche de matériau en poudre (4), le matériau en poudre (4) d'un réservoir (27) sur l'unité d'alimentation (9a) est utilisé,
le procédé comprenant :
- le remplissage intermittent du réservoir (27) avec le matériau en poudre (4) provenant d'une réserve principale sur l'appareil (1, 100), pendant la fabrication de l'objet (2),
le procédé comprenant en outre :
- la variation, par l'unité de commande (25), d'un intervalle du remplissage intermittent du réservoir (27) sur l'unité d'alimentation (9a) et de la quantité du matériau en poudre (4) avec laquelle le réservoir (27) est rempli, en fonction du paramètre lié à la distance entre le niveau de surface (L) et le support (5).

2. Procédé selon la revendication 1, utilisant un appareil dans lequel l'unité d'alimentation est agencée de manière à être déplacée le long du niveau de surface du bain de matériau en poudre conjointement avec l'unité de nivellement, où l'unité d'alimentation est déplacée le long du niveau de surface du bain de matériau en poudre conjointement avec l'unité de nivellement aux fins de l'étape d'alimentation et de nivellement.

3. Procédé selon la revendication 1, utilisant un appareil dans lequel l'unité d'alimentation est agencée de manière à être déplacée le long du niveau de surface du bain de matériau pour fournir la couche de matériau en poudre,
dans lequel l'unité de commande est également agencée pour commander le déplacement de l'unité d'alimentation le long du niveau de surface du bain et est configurée de sorte qu'en cours d'utilisation, la vitesse de déplacement de l'unité d'alimentation le long du niveau de surface du bain de matériau en poudre varie pendant la production de l'objet, en fonction de la position de l'unité d'alimentation le long du niveau de surface pendant l'alimentation et/ou d'un paramètre lié à la distance entre le niveau de surface et le support,
dans lequel l'étape d'alimentation comprend :
- la variation, par l'unité de commande, de la vitesse de déplacement de l'unité d'alimentation en fonction de la position de l'unité d'alimentation le long du niveau de surface pendant l'alimentation et/ou d'un paramètre lié à la distance entre le niveau de surface et le support,
de préférence, dans lequel, pendant ladite étape de nivellement du niveau de surface d'une couche, ladite vitesse de déplacement de l'unité de nivellement diffère de la vitesse de déplacement de l'unité d'alimentation pendant l'étape d'alimentation en cette couche de matériau en poudre.

4. Procédé selon l'une quelconque des revendications 1 à 3, dans lequel, aux fins de l'étape d'alimentation du bain en une couche de matériau en poudre, un dosage du matériau en poudre est fourni,
le procédé comprenant :
- la variation, par l'unité de commande, du dosage de matériau en poudre à fournir en fonction d'un paramètre lié à la distance entre le niveau de surface et le support.

5. Procédé selon la revendication 1 ou une revendication qui en dépend, comprenant en outre l'étape :
- d'attribution d'un paramètre lié à une qualité requise à des couches et/ou à une section individuelle d'une couche à fournir par l'unité d'alimentation du dispositif de recouvrement
dans lequel l'étape de nivellement comprend
- la variation, par l'unité de commande, de la vitesse de déplacement de l'unité de nivellement, en fonction dudit paramètre lié à une qualité requise attribué à la couche et/ou à une section de celle-ci, de sorte que la vitesse de déplacement soit plus élevée pendant le nivellement d'une couche ou d'une section de celle-ci ayant une qualité requise inférieure et plus faible pendant le nivellement d'une couche ou d'une section de celle-ci ayant une qualité requise supérieure.

6. Procédé selon la revendication 5, dans lequel l'étape d'attribution comprend l'attribution d'un paramètre lié à une qualité inférieure à une couche entière dont une partie de couche sélective de celle-ci, après sa solidification, est une partie de l'objet ayant une qualité requise relativement inférieure, et l'attribution d'un paramètre lié à une qualité supérieure à une autre couche entière dont une partie de couche sélective de celle-ci, après sa solidification, est une autre partie dudit objet ayant une qualité requise relativement supérieure.

7. Procédé selon la revendication 5 ou 6, dans lequel l'étape d'attribution comprend l'attribution d'un paramètre lié à une qualité inférieure à une section individuelle d'une couche, laquelle section est exempte de la partie de couche sélective de cette couche qui, après sa solidification, est une partie de l'objet, et l'attribution d'un paramètre lié à une qualité supérieure à une autre section individuelle de cette même couche, laquelle autre section comprend une partie de couche sélective de cette couche qui, après sa solidification, est une partie de l'objet.

8. Procédé selon l'une quelconque des revendications précédentes 5 à 7, dans lequel l'étape d'alimentation comprend :
- l'alimentation du bain en une première sous-couche de la couche par déplacement de l'unité d'alimentation le long du niveau de surface du bain dans une direction le long d'une trajectoire, et ensuite
- l'alimentation du bain en une seconde sous-couche restante de la couche par déplacement de l'unité d'alimentation le long du niveau de surface du bain dans la direction inverse le long de la trajectoire, à la suite de quoi une couche entière a été fournie au bain, où l'étape d'attribution comprend l'attribution d'un paramètre lié à une qualité inférieure à ladite première sous-couche et l'attribution d'un paramètre lié à une qualité supérieure à la seconde sous-couche ou au moins à une section individuelle de celle-ci, laquelle section comprend une partie de couche sélective de cette couche qui, après sa solidification, est une partie de l'objet.

9. Procédé selon l'une quelconque des revendications précédentes 5 à 8, dans lequel l'unité d'alimentation et l'unité de nivellement sont toutes deux déplacées dans une direction et la direction inverse le long d'une trajectoire le long du niveau de surface du bain pour l'alimentation et pour le nivellement de la couche,
dans lequel, dans le but de produire l'objet, une orientation angulaire, autour d'un axe perpendiculaire au support, de l'objet sur le support par rapport à la direction est choisie de sorte que la longueur totale, parallèle à la direction, de chacune des couches et/ou de leurs sections individuelles auxquelles un paramètre lié à une qualité supérieure est attribué soit la plus faible.

10. Procédé selon l'une quelconque des revendications précédentes 5 à 9, dans lequel le paramètre lié à la qualité est lié à une précision d'épaisseur de partie de couche requise, et/ou à une précision de niveau de surface, et/ou à une précision de contour de partie de couche requise.
